# EUROPEAN PATENT SPECIFICATION

(11) **EP 4 461 184 B1**
(45) Date of publication and mention of the grant of the patent: **30.09.2026**
(21) Application number: 23841580.6
(22) Date of filing: 31.08.2023
(51) Int. Cl.: A47L 11/28, A47L 11/40, D06F 33/50

(54) **CONTROL METHOD AND CONTROL APPARATUS FOR CLEANING DEVICE, AND CLEANING DEVICE**
STEUERUNGSVERFAHREN UND STEUERUNGSVORRICHTUNG FÜR REINIGUNGSVORRICHTUNG UND REINIGUNGSVORRICHTUNG
PROCÉDÉ DE COMMANDE ET APPAREIL DE COMMANDE POUR DISPOSITIF DE NETTOYAGE, ET DISPOSITIF DE NETTOYAGE

(30) Priority: 30.03.2023 CN 202310339622
(43) Date of publication of application: 13.11.2024
(73) Proprietor: Wuxi Little Swan Electric Co., Ltd., Wuxi, Jiangsu 214028 (CN)
(72) Inventor: ZHANG, Zhiwei, Wuxi, Jiangsu 214028 (CN)
(74) Representative: RGTH
(86) International application number: PCT/CN2023/116348
(87) International publication number: WO 2024/198231

(56) References cited:
- CN-A- 101 113 557
- CN-A- 110 130 043
- CN-A- 113 440 075
- CN-A- 114 995 237
- CN-A- 115 012 170
- CN-A- 115 012 170
- CN-A- 116 509 257
- CN-A- 116 509 271
- CN-A- 116 509 272
- CN-A- 116 509 273
- KR-A- 20080 035 539
- KR-A- 20180 106 327

## Description

### TECHNICAL FIELD

The application relates to the technical field of cleaners, and more particularly to a method for controlling a cleaner, a control device for a cleaner, and a cleaner.

### BACKGROUND

With the improvement of people's living standards and the development of production technologies of household appliances, there are more and more cleaners in homes of the people. However, since a space for the placement of the cleaners in the homes is usually limited, two cleaners with the same function or different functions may be integrated together, thereby saving the space.

In the related art, it is possible that a plurality of cleaners may perform work simultaneously. However, if the work performed simultaneously by the two cleaners of the plurality of cleaners interferes with each other, the two cleaners influence each other when they perform the work simultaneously. CN 115 012 170 A discloses a water circuit control method for a double washing machine, an electrical appliance and a double washing machine, designed to address the problems of slow water inlet rate and easy overflow.

### SUMMARY

### The technical problems to be solved

The technical problems to be solved by the application are to solve the problems that when a plurality of cleaners perform work simultaneously, the work performed simultaneously by two cleaners of the plurality of cleaners interferes with each other, and the two cleaners influence each other when they perform the work simultaneously.

### Technical solutions

In order to solve the above technical problems, the invention provides a method for controlling a cleaner, a control device for a cleaner, a computer-readable storage medium and a cleaner.

In a first aspect, the invention provides a method for controlling a cleaner. The cleaner includes a first apparatus and a second apparatus, one of the first apparatus and the second apparatus is a floor cleaner, and another one of the first apparatus and the second apparatus is a laundry treatment apparatus. The method includes the following operations.

A working request of the first apparatus is acquired.

A working state of the second apparatus is acquired.

It is determined that the working state of the second apparatus and the working request of the first apparatus meet a preset interference condition, at least one part of a first functional component corresponding to the working request of the first apparatus is controlled to be in a deactivated state, and/or at least one part of a second functional component corresponding to the working state of the second apparatus is controlled to be in a deactivated state.

Optionally, the first functional component at least includes two components, and the second functional component at least includes two components.

Optionally, the first apparatus is the laundry treatment apparatus, and the second apparatus is the floor cleaner. The first functional component at least includes a drying assembly and a steam generating assembly, and the second functional component at least includes a heating assembly for washing water and a pump assembly.

According to the present invention, the operation that it is determined that the working state of the second apparatus and the working request of the first apparatus meet the preset interference condition includes the following operation.

It is determined that a sum of a working power corresponding to the working state of the second apparatus and a working power corresponding to the working request of the first apparatus is greater than a preset power.

Optionally, the operation that it is determined that the working state of the second apparatus and the working request of the first apparatus meet the preset interference condition includes the following operation.

It is determined that a task corresponding to the working state of the second apparatus and a task corresponding to the working request of the first apparatus are a preset interference task.

Optionally, after the at least one part of the first functional component corresponding to the working request of the first apparatus is controlled to be in the deactivated state, the method includes the following operation.

The first apparatus is controlled to perform a remaining task in the working request.

Herein, the remaining task is a task in the working request except a task for operating the at least one part of the first functional component.

Optionally, after the second functional component corresponding to the working state of the second apparatus is controlled to be in the deactivated state, the method includes the following operation.

The first apparatus is controlled to perform a task corresponding to the working request.

Optionally, the first apparatus is the floor cleaner, and the second apparatus is the laundry treatment apparatus. The working request of the floor cleaner is a washing operation, and the working state of the laundry treatment apparatus is a drying working state. The first functional component includes a heating assembly for washing water.

The operation that the at least one part of the first functional component corresponding to the working request of the first apparatus is controlled to be in the deactivated state includes the following operation. The heating assembly for the washing water is controlled to be in the deactivated state.

Optionally, the first apparatus is the floor cleaner, and the second apparatus is the laundry treatment apparatus. The working request of the floor cleaner is a washing operation, and the working state of the laundry treatment apparatus is a drying working state. The second functional component includes a steam generating assembly.

The operation that the at least one part of the second functional component corresponding to the working state of the second apparatus is controlled to be in the deactivated state includes the following operation. The steam generating assembly is controlled to be in the deactivated state.

Optionally, the second apparatus is the floor cleaner, and the first apparatus is the laundry treatment apparatus.

The working request of the laundry treatment apparatus is a drying operation, and the working state of the floor cleaner is a washing working state. The first functional component includes a steam generating assembly.

The operation that the first functional component corresponding to the working request of the first apparatus is controlled to be in the deactivated state includes the following operation. The steam generating assembly is controlled to be in the deactivated state.

Optionally, the second apparatus is the floor cleaner, and the first apparatus is the laundry treatment apparatus.

The working request of the laundry treatment apparatus is a drying operation, and the working state of the floor cleaner is a washing working state. The second functional component includes a heating assembly for washing water.

The operation that the at least one part of the second functional component corresponding to the working state of the second apparatus is controlled to be in the deactivated state includes the following operation. The heating assembly for the washing water is controlled to be in the deactivated state.

In a second aspect, the invention also provides a control device for a cleaner. The control device for the cleaner includes a first acquisition module, a second acquisition module, and a control module.

The first acquisition module is configured to acquire a working request of a first apparatus.

The second acquisition module is configured to acquire a working state of a second apparatus.

The control module is configured to determine that the working state of the second apparatus and the working request of the first apparatus meet a preset interference condition, control at least one part of a first functional component corresponding to the working request of the first apparatus to be in a deactivated state, and/or control at least one part of a second functional component corresponding to the working state of the second apparatus to be in a deactivated state, wherein determining that the working state of the second apparatus and the working request of the first apparatus meet the preset interference condition comprises: determining that a sum of a working power corresponding to the working state of the second apparatus and a working power corresponding to the working request of the first apparatus is greater than a preset power.

In a third aspect, the invention also provides a computer-readable storage medium. The computer-readable storage medium has stored thereon a program or an instruction that, when executed by a computer, performs the operations of the method according to any one of the first aspect.

In a fourth aspect, the invention also provides a cleaner. The cleaner includes a processor and a memory, and the processor is configured to call a program or an instruction stored in the memory to perform the operations of the method according to any one of the first aspect.

### Beneficial effects

Compared with the related art, the above technical solutions provided by embodiments of the application have the following advantages.

The application provides a method for controlling a cleaner. The cleaner includes a first apparatus and a second apparatus, one of the first apparatus and the second apparatus is a floor cleaner, and another one of the first apparatus and the second apparatus is a laundry treatment apparatus. The method includes the following operations. A working request of the first apparatus is acquired. A working state of the second apparatus is acquired. It is determined that the working state of the second apparatus and the working request of the first apparatus meet a preset interference condition, at least one part of a first functional component corresponding to the working request of the first apparatus is controlled to be in a deactivated state, and/or at least one part of a second functional component corresponding to the working state of the second apparatus is controlled to be in a deactivated state. Therefore, the first functional component corresponding to the working request of the first apparatus is controlled to be in the deactivated state to reduce a working power of the first apparatus, and/or the second functional component corresponding to the working state of the second apparatus is controlled to be in the deactivated state to reduce a working power of the second apparatus. In this way, the first apparatus and the second apparatus may perform work simultaneously, to improve the cleaning efficiency of the cleaner, and the problems that the work performed simultaneously by the first apparatus and the second apparatus interferes with each other, and the first apparatus and the second apparatus influence each other when they perform the work simultaneously may be avoided.

It should be understood that the above general description and the following detailed description are only exemplary and explanatory, and are not intended to limit the application.

### BRIEF DESCRIPTION OF THE DRAWINGS

The drawings which are incorporated in the description and constitute a part of the description illustrate embodiments of the application, and explain the principle of the application together with the description.

In order to more clearly illustrate the technical solution in the embodiments of the application or in the related art, the drawings required to be used in the description of the embodiments or the related art will be briefly described below. It will be apparent that those skilled in the art may obtain other drawings according to these drawings without creative labor.
FIG. 1 is a schematic flowchart of a method for controlling a cleaner according to an embodiment of the application.
FIG. 2 is a front view of a cleaner according to an embodiment of the application.
FIG. 3 is a detailed schematic flowchart of a method for controlling a cleaner according to an embodiment of the application.
FIG. 4 is a detailed schematic flowchart of another method for controlling a cleaner according to an embodiment of the application.
FIG. 5 is a schematic diagram of a control device for a cleaner according to an embodiment of the application.
FIG. 6 is a schematic diagram of a cleaner according to an embodiment of the application.

### DETAILED DESCRIPTION

In order to make objectives, technical solutions and advantages of embodiments of the application more clear, the technical solutions in the embodiments of the application will be clearly and completely described below. It will be apparent that the described embodiments are part of, but not all of, the embodiments of the application. Based on the embodiments in the application, all other embodiments obtained by ordinary skill in the art without creative labor fall within the scope of protection of the application.

In the related art, it is possible that two cleaners with the same function or different work in integrated form may perform work simultaneously. If the work performed simultaneously by the two cleaners interferes with each other, the two cleaners influence each other when they perform the work simultaneously.

In order to solve the above problems, an embodiment of the application provides a method for controlling a cleaner. The method for controlling the cleaner may be performed by a first apparatus, which is configured to acquire a working request of the first apparatus and acquire a working state of a second apparatus. The method for controlling the cleaner may be performed by the second apparatus, which is configured to acquire the working request of the first apparatus and acquire the working state of the second apparatus. The method for controlling the cleaner may also be performed by a control device, such as an intelligent terminal, which is independent of the first apparatus and the second apparatus. The intelligent terminal is configured to acquire the working request of the first apparatus and acquire the working state of the second apparatus.

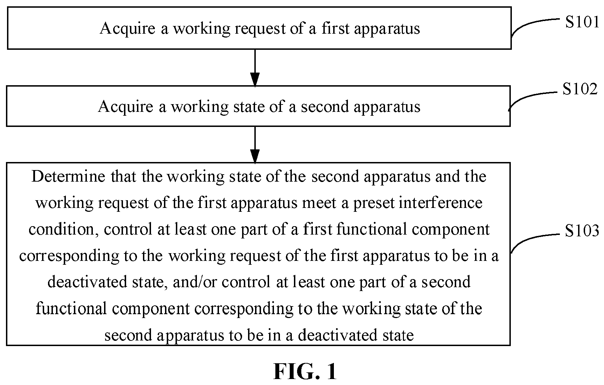

FIG. 1 is a schematic flowchart of a method for controlling a cleaner according to the invention. As shown in FIG. 1, the method includes the following operations.

At S101, a working request of a first apparatus is acquired.

Herein, the cleaner includes the first apparatus and a second apparatus, one of the first apparatus and the second apparatus is a floor cleaner, and another one of the first apparatus and the second apparatus is a laundry treatment apparatus.

Specifically, when the first apparatus needs to perform work, the working request of the first apparatus may, for example, be sent by the first apparatus or by an intelligent terminal in communication with the first apparatus. An apparatus for sending the working request of the first apparatus is not limited in the embodiment of the application.

At S102, a working state of the second apparatus is acquired.

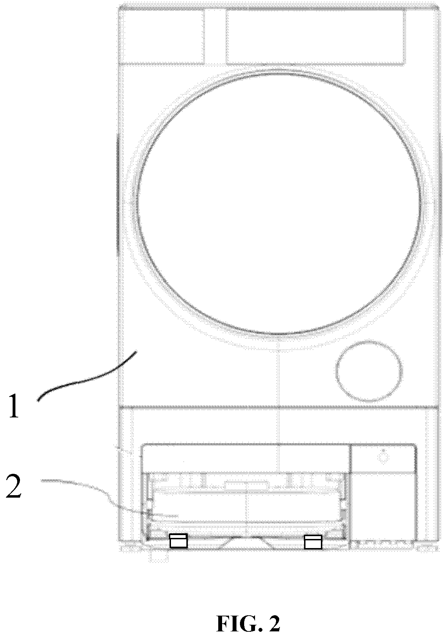

Specifically, FIG. 2 is a front view of a cleaner according to an embodiment of the application. FIG. 2 exemplarily shows that one of the first apparatus and the second apparatus is a floor cleaner 2, and another one of the first apparatus and the second apparatus is a laundry treatment apparatus 1. The floor cleaner 2 is arranged below the laundry treatment apparatus 1, and a space below the laundry treatment apparatus 1 provides a floor space for the floor cleaner 2, to prevent the floor cleaner 2 from occupying an additional space. In addition, the first apparatus and the second apparatus may be independently and separately arranged. The embodiment of the application is not limited thereto.

Exemplarily, each of the first apparatus and the second apparatus is an apparatus with cleaning requirements. The first apparatus may, for example, be provided as a floor cleaner, and the second apparatus may, for example, be provided as a laundry treatment apparatus. Alternatively, the first apparatus may, for example, be provided as a laundry treatment apparatus, and the second apparatus may, for example, be provided as a floor cleaner. The embodiment of the application is not limited thereto. When the second apparatus is performing work, the working state of the second apparatus may, for example, be sent by the second apparatus or by an intelligent terminal in communication with the second apparatus. An apparatus for sending the working state of the second apparatus is not limited in the embodiment of the application.

At S103, it is determined that the working state of the second apparatus and the working request of the first apparatus meet a preset interference condition, at least one part of a first functional component corresponding to the working request of the first apparatus is controlled to be in a deactivated state, and/or at least one part of a second functional component corresponding to the working state of the second apparatus is controlled to be in a deactivated state.

In some embodiments, if the first apparatus needs to perform work, the working state of the second apparatus may be acquired, and it is determined whether the working state of the second apparatus and the working request of the first apparatus meet the preset interference condition. Exemplarily, the first apparatus is provided as the floor cleaner, and the second apparatus is provided as the laundry treatment apparatus. After the floor cleaner cleans floor, a cleaning element of the floor cleaner becomes dirty, and the floor cleaner returns to a base station to allow the cleaning element of the floor cleaner to be washed. If the cleaning element of the floor cleaner needs to be washed while the laundry treatment apparatus is performing drying work, an electrical power in homes may not meet the requirements for the laundry treatment apparatus to perform the drying work and the base station to perform washing work simultaneously, and the floor cleaner and the laundry treatment apparatus cannot perform work simultaneously. Therefore, the washing work of the floor cleaner and the drying work of the laundry treatment apparatus are provided as interference work, and the working state of the second apparatus and the working request of the first apparatus meet the preset interference condition.

Exemplarily, the first apparatus is for example the floor cleaner. When the floor cleaner returns to the base station to allow the cleaning element to be washed, a plurality of functional components, such as a pump assembly and a heating assembly for washing water, need to be activated to realize the washing of the cleaning element. Herein, for example, the heating assembly for the washing water is configured to heat the washing water to improve the washing efficiency and the washing effect of the cleaning element, and the pump assembly is configured to drive the cleaning element to rotate to realize the washing. In the embodiment of the application, each of the components that enable the cleaning element of the floor cleaner to be washed, such as the heating assembly for the washing water and the pump assembly, may be provided as the first functional component corresponding to a washing working request of the floor cleaner.

Exemplarily, the second apparatus is for example the laundry treatment apparatus. When the laundry treatment apparatus performs the drying work of laundries, a plurality of functional components, such as a drying assembly and a steam generating assembly, need to be activated to realize the drying of the laundries. Herein, the drying assembly is configured to dry the laundries, and the steam generating assembly is configured to iron the laundries after generating steam, to avoid the appearance of wrinkles of the dried laundries. In the embodiment of the application, each of the components that enable the laundry treatment apparatus to dry the laundries, such as the steam generating assembly and the drying assembly, may be provided as the second functional component corresponding to a drying working state of the laundry treatment apparatus.

In order to solve the problems that a task corresponding to the working state of the laundry treatment apparatus and a task corresponding to the working request of the floor cleaner are the interference task, and the floor cleaner and the laundry treatment apparatus cannot perform work simultaneously, the following operations may be performed. The heating assembly for the washing water of the floor cleaner may be in the deactivated state to reduce a working power of the floor cleaner, and only the cleaning element of the floor cleaner may be washed with room temperature water. For example, the steam generating assembly of the laundry treatment apparatus may also be deactivated to reduce a working power of the laundry treatment apparatus, and the laundry treatment apparatus may perform drying task except ironing task of the steam generating assembly. In addition, the heating assembly for the washing water of the floor cleaner and the steam generating assembly of the laundry treatment apparatus may also be controlled to be in the deactivated state, to reduce the working power of the floor cleaner and the working power of the laundry treatment apparatus.

Therefore, in the embodiment of the application, the at least one part of the first functional component corresponding to the working request of the first apparatus is controlled to be in the deactivated state to reduce the working power of the first apparatus, and/or the at least one part of the second functional component corresponding to the working state of the second apparatus is controlled to be in the deactivated state to reduce the working power of the second apparatus. In this way, the first apparatus and the second apparatus may perform the work simultaneously, to improve the cleaning efficiency of the cleaner, and the problems that the work performed simultaneously by the first apparatus and the second apparatus interferes with each other, and the first apparatus and the second apparatus influence each other when they perform the work simultaneously may be avoided.

Optionally, the first functional component at least includes two components, and the second functional component at least includes two components.

Exemplarily, the first apparatus is for example the laundry treatment apparatus, and the second apparatus is for example the floor cleaner. For example, when the laundry treatment apparatus needs to dry the laundries, not only the drying function may be realized, but also the function such as the ironing function may be realized. When the laundries are dried, a plurality of components corresponding to the different functions need to be activated in order to realize the different functions. Therefore, for example, the first functional component at least may include two components.

When the cleaning element of the floor cleaner is washed, the cleaning element may be rotated to realize the washing of the cleaning element, and the washing water may also be heated to improve the washing efficiency and the washing effect. When the cleaning element is washed, a plurality of components corresponding to different functions need to be activated in order to realize the different functions. Therefore, for example, the second functional component at least may include two components.

Optionally, the first apparatus is the laundry treatment apparatus, and the second apparatus is the floor cleaner. The first functional component at least includes a drying assembly and a steam generating assembly, and the second functional component at least includes a heating assembly for washing water and a pump assembly.

Exemplarily, the first apparatus is for example the laundry treatment apparatus, and the second apparatus is for example the floor cleaner. For example, when the laundry treatment apparatus needs to dry the laundries, it is necessary to dry the laundries by the drying assembly. In addition to the drying function, when the laundries are dried, it is also possible to iron the laundries by the steam generating assembly. Therefore, for example, the first functional component at least includes the drying assembly and the steam generating assembly. It should be noted that gas generated by the steam generating assembly may, for example, be steam generated by heating or spray generated by ultrasound. The embodiment of the application is not limited thereto.

For example, when the cleaning element of the floor cleaner needs to be washed, it is necessary to drive the cleaning element to rotate by the pump assembly to realize the washing of the cleaning element. In addition, it is also possible to heat the washing water by the heating assembly for the washing water to improve the washing effect and the washing efficiency of the cleaning element. Therefore, for example, the second functional component at least includes the pump assembly and the heating assembly for the washing water.

According to the present invention, the operation that it is determined that the working state of the second apparatus and the working request of the first apparatus meet the preset interference condition includes the following operation.

It is determined that a sum of a working power corresponding to the working state of the second apparatus and a working power corresponding to the working request of the first apparatus is greater than a preset power.

Specifically, when the sum of the working power corresponding to the working request of the first apparatus and the working power corresponding to the working state of the second apparatus is too large and greater than the preset power, if the first apparatus and the second apparatus perform the work simultaneously, a socket for supplying power to the first apparatus and the second apparatus may not meet the requirements for the working power of the first apparatus and the working power of the second apparatus. In this way, the working efficiency of the cleaner is reduced. Therefore, when the sum of the working power corresponding to the working request of the first apparatus and the working power corresponding to the working state of the second apparatus is greater than the preset power, the at least one part of the first functional component corresponding to the working request of the first apparatus is controlled to be in the deactivated state, and/or at the at least one part of the second functional component corresponding to the working state of the second apparatus is controlled to be in the deactivated state. In this way, the working power of the first apparatus and/or the working power of the second apparatus is/are reduced, and the problem that the first apparatus and the second apparatus interfere with each other when they perform the work simultaneously is avoided.

Optionally, the operation that it is determined that the working state of the second apparatus and the working request of the first apparatus meet the preset interference condition includes the following operation.

It is determined that task corresponding to the working state of the second apparatus and task corresponding to the working request of the first apparatus are a preset interference task.

Exemplarily, the first apparatus is for example the floor cleaner, and the second apparatus is for example the laundry treatment apparatus. The laundry treatment apparatus is configured to perform a plurality of work, such as soaking work, washing work, rinsing work and drying work, and the floor cleaner is also configured to perform a plurality of work, such as floor cleaning work, washing work and charging work. The washing work of the floor cleaner and the drying work of the laundry treatment apparatus may be pre-set as the preset interference task. When the task corresponding to the working state of the laundry treatment apparatus is the drying work and the task corresponding to the working request of the floor cleaner is the washing work, it is determined that the working state of the second apparatus and the working request of the first apparatus meet the preset interference condition.

Optionally, after the first functional component corresponding to the working request of the first apparatus is controlled to be in the deactivated state, the method includes the following operation.

The first apparatus is controlled to perform a remaining task in the working request.

Herein, the remaining task is a task except a task for operating the first functional component.

Exemplarily, the first apparatus is for example the floor cleaner, and the second apparatus is for example the laundry treatment apparatus. When the cleaning element of the floor cleaner needs to be washed, the first functional component in the floor cleaner is for example the heating assembly for the washing water. When the sum of the working power corresponding to the working state of the laundry treatment apparatus and the working power corresponding to the working request of the floor cleaner is greater than the preset power, the heating assembly for the washing water may be controlled to be deactivated to reduce the working power of the floor cleaner, and the base station is controlled to wash the cleaning element with the room temperature water to realize the washing of the cleaning element. Therefore, the laundry treatment apparatus and the floor cleaner may perform the work simultaneously without affecting the normal washing of the cleaning element of the floor cleaner. In this way, the problem that the cleaning efficiency of the cleaner is reduced after the floor cleaner or the laundry treatment apparatus is deactivated is avoided, and the cleaning efficiency of the cleaner is improved.

Optionally, after the second functional component corresponding to the working state of the second apparatus is controlled to be in the deactivated state, the method includes the following operation.

The first apparatus is controlled to perform a task corresponding to the working request.

Specifically, the first apparatus is for example the floor cleaner, and the second apparatus is for example the laundry treatment apparatus. For example, the laundry treatment apparatus is performing the drying work, and the second functional component such as the steam generating assembly is activated to iron the laundries, at this time the cleaning element of the floor cleaner needs to be washed. When the sum of the working power of the washing work of the floor cleaner and the working power of the drying work of the laundry treatment apparatus is greater than the preset power, in order to enable the floor cleaner and the laundry treatment apparatus to perform the work simultaneously, the steam generating assembly of the laundry treatment apparatus may be controlled to be deactivated to reduce the working power of the laundry treatment apparatus, the laundry treatment apparatus performs a task except a task for ironing the wrinkles, and the floor cleaner is controlled to perform the washing task of the cleaning element. Therefore, the floor cleaner and the laundry treatment apparatus may perform the task simultaneously without affecting the drying effect of the laundries by the laundry treatment apparatus and the washing effect of the cleaning element of the floor cleaner. In this way, the cleaning efficiency of the cleaner is improved.

Optionally, the first apparatus is the floor cleaner, and the second apparatus is the laundry treatment apparatus. The working request of the floor cleaner is a washing operation, and the working state of the laundry treatment apparatus is a drying working state. The first functional component includes a heating assembly for washing water.

The operation that the at least one part of the first functional component corresponding to the working request of the first apparatus is controlled to be in the deactivated state includes the following operation. The heating assembly for the washing water is controlled to be in the deactivated state.

Exemplarily, the first apparatus is for example the floor cleaner, and the second apparatus is for example the laundry treatment apparatus. After the floor cleaner cleans floor, the cleaning element of the floor cleaner becomes dirty. When the floor cleaner returns to the base station to allow the cleaning element to be washed, since the sum of the working power corresponding to the working request of the floor cleaner and the working power corresponding to the working state of the laundry treatment apparatus is greater than the preset power, the socket for supplying the power to the floor cleaner and the laundry treatment apparatus may not meet the requirements for the floor cleaner to perform the washing operation and the laundry treatment apparatus to perform the drying work simultaneously. Therefore, the heating assembly for the washing water of the floor cleaner may be controlled to be deactivated, that is, the washing water is not heated, and the cleaning element of the floor cleaner is washed with the room temperature water. Therefore, the working power of the floor cleaner is reduced, and the sum of the working power of the laundry treatment apparatus and the working power of the floor cleaner is less than or equal to the preset power without affecting the washing effect of the floor cleaner. In this way, the floor cleaner and the laundry treatment apparatus may perform the work simultaneously, to ensure the electricity safety and improve the cleaning efficiency of the cleaner.

It should be noted that, when the heating assembly for the washing water is controlled to be in the deactivated state, the second functional component of the laundry treatment apparatus may be in the deactivated state or in an activated state, which may be set according to an actual use power of the cleaner. The embodiment of the application is not limited thereto.

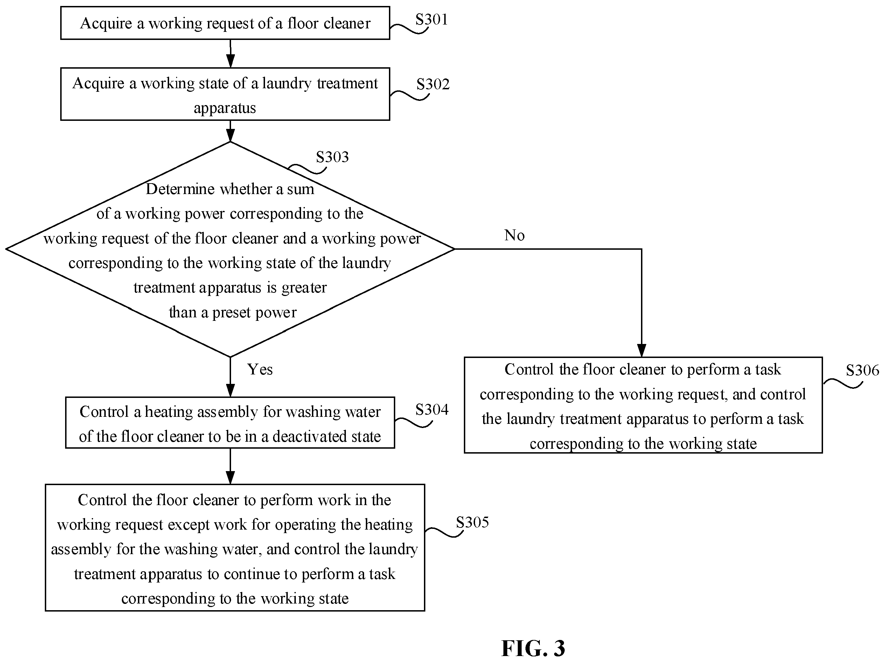

FIG. 3 is a detailed schematic flowchart of a method for controlling a cleaner according to an embodiment of the application. As shown in FIG. 3, the method includes the following operations.

At S301: a working request of a floor cleaner is acquired.

At S302, a working state of a laundry treatment apparatus is acquired.

At S303, it is determined whether a sum of a working power corresponding to the working request of the floor cleaner and a working power corresponding to the working state of the laundry treatment apparatus is greater than a preset power. If the sum of the working power corresponding to the working request of the floor cleaner and the working power corresponding to the working state of the laundry treatment apparatus is greater than the preset power, S304 is performed. If the sum of the working power corresponding to the working request of the floor cleaner and the working power corresponding to the working state of the laundry treatment apparatus is less than or equal to the preset power, S306 is performed.

At S304, a heating assembly for washing water of the floor cleaner is controlled to be in a deactivated state.

At S305, the floor cleaner is controlled to perform work in the working request except work for operating the heating assembly for the washing water, and the laundry treatment apparatus is controlled to continue to perform a task corresponding to the working state.

At S306, the floor cleaner is controlled to perform a task corresponding to the working request, and the laundry treatment apparatus is controlled to perform a task corresponding to the working state.

Optionally, a first apparatus is the floor cleaner, and a second apparatus is the laundry treatment apparatus. The working request of the floor cleaner is a washing operation, and the working state of the laundry treatment apparatus is a drying working state. A second functional component includes a steam generating assembly.

The operation that at least one part of the second functional component corresponding to the working state of the second apparatus is controlled to be in the deactivated state includes the following operation. The steam generating assembly is controlled to be in the deactivated state.

Exemplarily, the first apparatus is for example the floor cleaner, and the second apparatus is for example the laundry treatment apparatus. When a cleaning element of the floor cleaner needs to be washed, since the sum of the working power corresponding to the washing operation of the floor cleaner and the working power corresponding to the drying working state of the laundry treatment apparatus is greater than the preset power, a socket for supplying power to the floor cleaner and the laundry treatment apparatus may not meet the requirements for the floor cleaner to perform the washing operation and the laundry treatment apparatus to perform drying work simultaneously. The steam generating assembly of the laundry treatment apparatus may be controlled to be in the deactivated state, and the laundry treatment apparatus performs drying work except ironing work. Therefore, the working power of the laundry treatment apparatus is reduced, and the sum of the working power of the laundry treatment apparatus and the working power of the floor cleaner is less than or equal to the preset power without affecting the drying effect of laundries, to ensure the electricity safety. The floor cleaner may perform the washing operation when the laundry treatment apparatus performs the drying work, to improve the cleaning efficiency of the cleaner.

It should be noted that, when the steam generating assembly is controlled to be in the deactivated state, the heating assembly for the washing water of the floor cleaner may be in the deactivated state or in an activated state, which may be set according to an actual use power of the cleaner. The embodiment of the application is not limited thereto.

Optionally, the second apparatus is the floor cleaner, and the first apparatus is the laundry treatment apparatus.

A working request of the laundry treatment apparatus is a drying operation, and a working state of the floor cleaner is a washing working state. A first functional component includes the steam generating assembly.

The operation that the first functional component corresponding to the working request of the first apparatus is controlled to be in the deactivated state includes the following operation. The steam generating assembly is controlled to be in the deactivated state.

Exemplarily, the first apparatus is for example the laundry treatment apparatus, and the second apparatus is for example the floor cleaner. When the cleaning element of the floor cleaner is being washed, the laundry treatment apparatus needs to dry the laundries. In order to continue to enable the cleaning element of the floor cleaner to be washed, the steam generating assembly of the laundry treatment apparatus may be kept in the deactivated state, and the laundry treatment apparatus may be controlled to perform drying work except work for operating the steam generating assembly. For example, when the laundries are dried, the laundries are not ironed, and only moisture on the laundries is removed. Therefore, by controlling the steam generating assembly to be in the deactivated state, the working power of the laundry treatment apparatus is reduced, and the sum of the working power of the laundry treatment apparatus and the working power of the floor cleaner is less than or equal to the preset power without affecting the drying effect of the laundry treatment apparatus, to ensure the electricity safety. The laundry treatment apparatus may perform the drying operation when the floor cleaner performs the washing operation, to improve the cleaning efficiency of the cleaner.

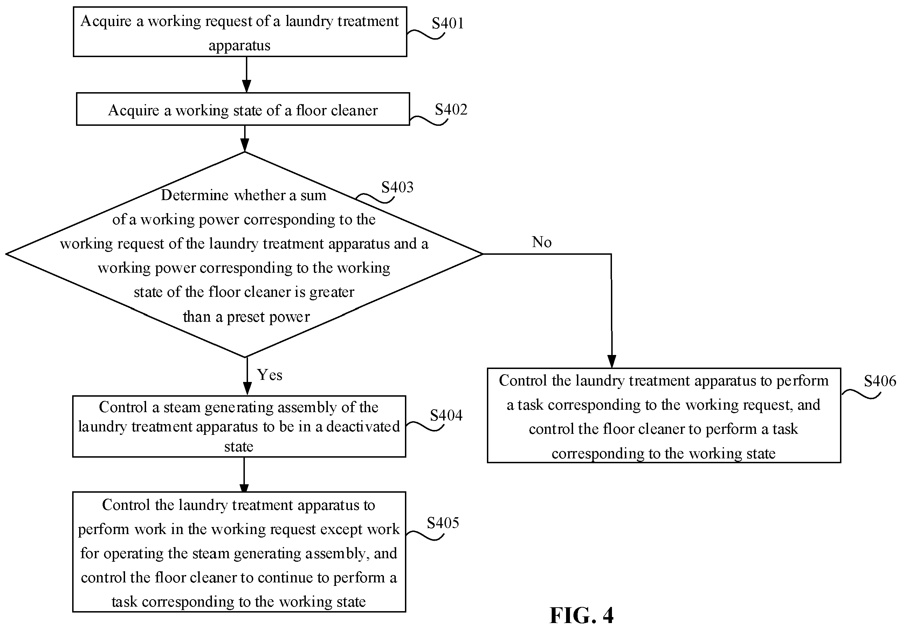

FIG. 4 is a detailed schematic flowchart of another method for controlling a cleaner according to an embodiment of the application. As shown in FIG. 4, the method includes the following operations.

At S401: a working request of a laundry treatment apparatus is acquired.

At S402, a working state of a floor cleaner is acquired.

At S403, it is determined whether a sum of a working power corresponding to the working request of the laundry treatment apparatus and a working power corresponding to the working state of the floor cleaner is greater than a preset power. If the sum of the working power corresponding to the working request of the laundry treatment apparatus and the working power corresponding to the working state of the floor cleaner is greater than the preset power, S404 is performed. If the sum of the working power corresponding to the working request of the laundry treatment apparatus and the working power corresponding to the working state of the floor cleaner is less than or equal to the preset power, S406 is performed.

At S404, a steam generating assembly of the laundry treatment apparatus is controlled to be in a deactivated state.

At S405, the laundry treatment apparatus is controlled to perform work in the working request except work for operating the steam generating assembly, and the floor cleaner is controlled to continue to perform a task corresponding to the working state.

At S406, the laundry treatment apparatus is controlled to perform a task corresponding to the working request, and the floor cleaner is controlled to perform a task corresponding to the working state.

Optionally, a second apparatus is the floor cleaner, and a first apparatus is the laundry treatment apparatus.

The working request of the laundry treatment apparatus is a drying operation, and the working state of the floor cleaner is a washing working state. A second functional component includes a heating assembly for washing water.

The operation that at least one part of the second functional component corresponding to the working state of the second apparatus is controlled to be in the deactivated state includes the following operation. The heating assembly for the washing water is controlled to be in the deactivated state.

Exemplarily, the first apparatus is for example the laundry treatment apparatus, and the second apparatus is for example the floor cleaner. When a cleaning element of the floor cleaner is being washed, the laundry treatment apparatus needs to dry laundries. Since the sum of the working power corresponding to washing work of the floor cleaner and the working power corresponding to the drying operation of the laundry treatment apparatus is greater than the preset power, in order to continue to enable the cleaning element of the floor cleaner to be washed without being affected by the working request of the laundry treatment apparatus, the heating assembly for the washing water of the floor cleaner may be controlled to be deactivated, and only the cleaning element is washed with room temperature water. The working power of the floor cleaner is reduced, and the sum of the working power of the laundry treatment apparatus and the working power of the floor cleaner is less than or equal to the preset power without affecting the washing of the cleaning element of the floor cleaner, to ensure the electricity safety. The laundry treatment apparatus may perform the drying operation when the floor cleaner performs a washing operation, to improve the cleaning efficiency of the cleaner, and avoid the problem that the laundry treatment apparatus performs drying work after the washing operation of the floor cleaner is ended which affects the user experience.

In the embodiment of the application, the first functional component corresponding to the working request of the first apparatus is controlled to be in the deactivated state to reduce the working power of the first apparatus, and/or the second functional component corresponding to the working state of the second apparatus is controlled to be in the deactivated state to reduce the working power of the second apparatus. In this way, the first apparatus and the second apparatus may perform the work simultaneously, to improve the cleaning efficiency of the cleaner, and avoid the problems that the work performed simultaneously by the first apparatus and the second apparatus interferes with each other, and the first apparatus and the second apparatus influence each other when they perform the work simultaneously.

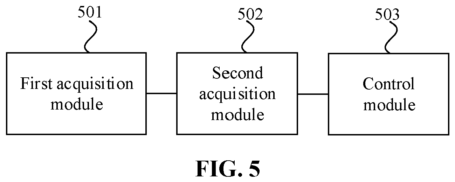

The invention also provides a control device for a cleaner. FIG. 5 is a schematic diagram of a control device for a cleaner according to an embodiment of the application. As shown in FIG. 5, the control device for the cleaner includes a first acquisition module 501, a second acquisition module 502 and a control module 503. The first acquisition module 501 is configured to acquire a working request of a first apparatus. The second acquisition module 502 is configured to acquire a working state of a second apparatus. The control module 503 is configured to determine that the working state of the second apparatus and the working request of the first apparatus meet a preset interference condition, control at least one part of a first functional component corresponding to the working request of the first apparatus to be in a deactivated state, and/or control at least one part of a second functional component corresponding to the working state of the second apparatus to be in a deactivated state, wherein determining that the working state of the second apparatus and the working request of the first apparatus meet the preset interference condition comprises: determining that a sum of a working power corresponding to the working state of the second apparatus and a working power corresponding to the working request of the first apparatus is greater than a preset power.

The device according to the embodiment of the application and the method according to the embodiment of the application have the same inventive concept and have the same beneficial effects, which will not be repeated herein.

The invention also provides a computer-readable storage medium. The computer-readable storage medium has stored thereon a program or an instruction that, when executed by a computer, performs the operations of the method according to any one of the above embodiments.

In some embodiments, computer-executable instructions, when executed by a computer processor, may also perform the technical solutions of the method according to any one of the above embodiments of the application, to realize corresponding beneficial effects.

From the description of above embodiments, it will be apparent to those skilled in the art that the application may be implemented by means of software and necessary general purpose hardware, and of course by means of hardware. However, in many cases, the application may be implemented by means of the software and the necessary general hardware, which is a preferred implementation. Based on such an understanding, the technical solutions of the application in essence or parts of the technical solutions of the application which contribute to the related art may be embodied in the form of software product, and the computer software product may be stored in a computer-readable storage medium, such as a floppy disk of a computer, a read only memory, ROM, a random access memory, RAM, a flash memory, a hard disk or an optical disk and the like, including several instructions to enable a computer device (which may be a personal computer, a server or a network device and the like) to perform the method according to any one of various embodiments of the application.

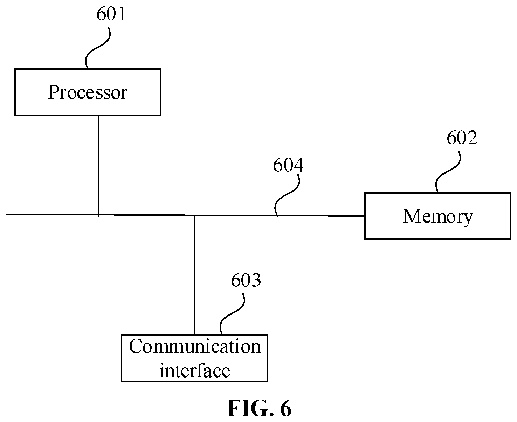

FIG. 6 is a schematic diagram of a cleaner according to the invention. As shown in FIG. 6, the cleaner includes a processor 601 and a memory 602, and the processor 601 is configured to call a program or an instruction stored in the memory 602 to perform the operations of the method according to any one of the above various embodiments, to realize the beneficial effects of the above embodiments, which will not be repeated herein.

Specifically, as shown in FIG. 6, the cleaner may include at least one processor 601, at least one memory 602 and at least one communication interface 603. Various components in the cleaner are coupled to each other by a bus system 604. The communication interface 603 is configured for information transmission with external devices. It can be understood that the bus system 604 is configured to implement communication among these components. The bus system 604 includes a power bus, a control bus and a status signal bus in addition to a data bus. However, for clarity of illustration, various buses are designated as the bus system 604 in FIG. 6.

It can be understood that the memory 602 in the embodiment may be a volatile memory or a non-volatile memory, or may include a volatile memory and a non-volatile memory. In some embodiments, the memory 602 is configured to store the following elements: an executable unit or a data structure, or a subset thereof, or an extended set operating system and an application program thereof. In embodiment of the application, the processor 601 is configured to call the program or instruction stored in the memory 602 to perform the operations of the method according to the embodiment of the application.

The method according to the embodiment of the application may be applied to or implemented by the processor 601. The processor 601 may be an integrated circuit chip with signal processing capability. In the implementation process, each operation of the above method may be completed by the instructions in the form of integrated logic circuit of hardware or software in the processor 601. The above processor 601 may be a general purpose processor, a digital signal processor, DSP, an application specific integrated circuit, ASIC, a field programmable gate array, FPGA, or another programmable logic device, a discrete gate or transistor logic device, or a discrete hardware component. The general purpose processor may be a microprocessor, or the processor may be any conventional processor and the like.

The operations of the method according to the embodiment of the application may be directly embodied as being executed by a hardware decoding processor, or by the combination of the hardware and software units in the decoding processor. The software units may be located in a storage medium in the art, such as a random access memory, a flash memory, a read only memory, a programmable read only memory, an electrically erasable programmable memory, a register and the like. The storage medium is located in the memory 602, and the processor 601 is configured to read the information in the memory 602 and execute the operations of the method in combination with the hardware of the processor.

The cleaner may also include an entity component or a plurality of entity components, to generate the instructions according to the processor 601 when performing the method according to the embodiment of application. Different entity components may be provided inside or outside the cleaner, such as a cloud server. Each of the entity components cooperates with the processor 601 and the memory 602, to implement the function of the cleaner in the embodiment.

It should be noted that the relationship terms such as "first", "second" and the like herein are only used to distinguish one entity or operation from another entity or operation, and do not necessarily require or imply any such actual relationship or order among these entities or operations. Moreover, the terms "including", "include" or any other variation thereof are intended to encompass non-exclusive inclusion, so that a process, a method, an object or a device that includes a set of elements includes not only those elements but also other elements that are not explicitly listed, or also includes elements inherent to such the process, the method, the object or the device. **In** the absence of further limitations, an element defined by the phrase "includes a ..." does not preclude the existence of another identical element in the process, the method, the object or the device that includes the element.

What described above are only specific embodiments of the application to enable those skilled in the art to understand or implement the application. It would be apparent to those skilled in the art that various modifications may be made to these embodiments. The general principle defined herein may be implemented in other embodiments without departing from the spirit or scope of the application. Therefore, the application will not be limited to these embodiments shown herein, but is intended to conform to the widest scope consistent with the principle and novel feature disclosed herein.

### Industrial applicability

The application provides a method for controlling a cleaner. A working request of the first apparatus is acquired. A working state of the second apparatus is acquired. It is determined that the working state of the second apparatus and the working request of the first apparatus meet a preset interference condition, at least one part of a first functional component corresponding to the working request of the first apparatus is controlled to be in a deactivated state, and/or at least one part of a second functional component corresponding to the working state of the second apparatus is controlled to be in a deactivated state. Therefore, the first apparatus and the second apparatus may perform work simultaneously, to improve the cleaning efficiency of the cleaner, and avoid the problems that a sum of a working power of the first apparatus and a working power of the second apparatus is too large, and the first apparatus and the second apparatus influence each other when they perform the work simultaneously. Therefore, the application has strong industrial applicability.

## Claims

1. A method for controlling a cleaner, wherein the cleaner comprises a first apparatus and a second apparatus, one of the first apparatus and the second apparatus is a floor cleaner (2), and another one of the first apparatus and the second apparatus is a laundry treatment apparatus (1), the method comprising:
(S101) acquiring a working request of the first apparatus;
(S102) acquiring a working state of the second apparatus; and
(S103) determining that the working state of the second apparatus and the working request of the first apparatus meet a preset interference condition, controlling at least one part of a first functional component corresponding to the working request of the first apparatus to be in a deactivated state, and/or controlling at least one part of a second functional component corresponding to the working state of the second apparatus to be in a deactivated state;
**characterized in that** determining that the working state of the second apparatus and the working request of the first apparatus meet the preset interference condition comprises: determining that a sum of a working power corresponding to the working state of the second apparatus and a working power corresponding to the working request of the first apparatus is greater than a preset power.

2. The method for controlling the cleaner according to claim 1, wherein the first functional component at least comprises two components, and the second functional component at least comprises two components.

3. The method for controlling the cleaner according to claim 2, wherein the first apparatus is the laundry treatment apparatus, the second apparatus is the floor cleaner, the first functional component at least comprises a drying assembly and a steam generating assembly, and the second functional component at least comprises a heating assembly for washing water and a pump assembly.

4. The method for controlling the cleaner according to claim 1, wherein determining that the working state of the second apparatus and the working request of the first apparatus meet the preset interference condition comprises:
determining that a task corresponding to the working state of the second apparatus and a task corresponding to the working request of the first apparatus are a preset interference task.

5. The method for controlling the cleaner according to claim 1, wherein after controlling the at least one part of the first functional component corresponding to the working request of the first apparatus to be in the deactivated state, the method comprises:
controlling the first apparatus to perform a remaining task in the working request,
wherein the remaining task is a task except a task for operating the at least one part of the first functional component.

6. The method for controlling the cleaner according to claim 1, wherein after controlling the at least one part of the second functional component corresponding to the working state of the second apparatus to be in the deactivated state, the method comprises:
controlling the first apparatus to perform a task corresponding to the working request.

7. The method for controlling the cleaner according to claim 1, wherein the first apparatus is the floor cleaner (2), the second apparatus is the laundry treatment apparatus (1), the working request of the floor cleaner (2) is a washing operation, the working state of the laundry treatment apparatus (1) is a drying working state, and the first functional component comprises a heating assembly for washing water,
wherein controlling the at least one part of the first functional component corresponding to the working request of the first apparatus to be in the deactivated state comprises:
(S304) controlling the heating assembly for the washing water to be in the deactivated state.

8. The method for controlling the cleaner according to claim 1, wherein the first apparatus is the floor cleaner (2), the second apparatus is the laundry treatment apparatus (1), the working request of the floor cleaner (2) is a washing operation, the working state of the laundry treatment apparatus (1) is a drying working state, and the second functional component comprises a steam generating assembly,
wherein controlling the at least one part of the second functional component corresponding to the working state of the second apparatus to be in the deactivated state comprises:
(S404) controlling the steam generating assembly to be in the deactivated state.

9. The method for controlling the cleaner according to claim 1, wherein the second apparatus is the floor cleaner (2), and the first apparatus is the laundry treatment apparatus (1); and
the working request of the laundry treatment apparatus (1) is a drying operation, the working state of the floor cleaner (2) is a washing working state, and the first functional component comprises a steam generating assembly,
wherein controlling the at least one part of the first functional component corresponding to the working request of the first apparatus to be in the deactivated state comprises:
(S404) controlling the steam generating assembly to be in the deactivated state.

10. The method for controlling the cleaner according to claim 1, wherein the second apparatus is the floor cleaner (2), and the first apparatus is the laundry treatment apparatus (1); and
the working request of the laundry treatment apparatus (1) is a drying operation, the working state of the floor cleaner (2) is a washing working state, and the second functional component comprises a heating assembly for washing water,
wherein controlling the at least one part of the second functional component corresponding to the working state of the second apparatus to be in the deactivated state comprises:
(S304) controlling the heating assembly for the washing water to be in the deactivated state.

11. A control device for a cleaner, wherein the cleaner comprises a first apparatus and a second apparatus, one of the first apparatus and the second apparatus is a floor cleaner (2), and another one of the first apparatus and the second apparatus is a laundry treatment apparatus (1), the control device comprising:
a first acquisition module (501), configured to acquire a working request of a first apparatus;
a second acquisition module (502), configured to acquire a working state of a second apparatus; and
a control module (503), configured to determine that the working state of the second apparatus and the working request of the first apparatus meet a preset interference condition, control at least one part of a first functional component corresponding to the working request of the first apparatus to be in a deactivated state, and/or control at least one part of a second functional component corresponding to the working state of the second apparatus to be in a deactivated state;
**characterized in that** determining that the working state of the second apparatus and the working request of the first apparatus meet the preset interference condition comprises: determining that a sum of a working power corresponding to the working state of the second apparatus and a working power corresponding to the working request of the first apparatus is greater than a preset power.

12. A computer-readable storage medium having stored thereon a program or an instruction that, when executed by a computer, performs a method according to any one of claims 1 to 10.

13. A cleaner comprising a processor (601) and a memory (602), wherein the processor (601) is configured to call a program or an instruction stored in the memory (602) to perform a method according to any one of claims 1 to 10.

## Patentansprüche

1. Verfahren zum Steuern eines Reinigungsgeräts, wobei das Reinigungsgerät ein erstes Gerät und ein zweites Gerät umfasst, wobei eines des ersten und des zweiten Geräts ein Bodenreinigungsgerät (2) ist und ein anderes des ersten und des zweiten Geräts ein Wäschebehandlungsgerät (1) ist, wobei das Verfahren Folgendes umfasst:
(S101) Erfassen einer Betriebsanforderung des ersten Geräts;
(S102) Erfassen eines Betriebszustands des zweiten Geräts; und
(S103) Bestimmen, dass der Betriebszustand des zweiten Geräts und die Betriebsanforderung des ersten Geräts eine voreingestellte Interferenzbedingung erfüllen, Steuern mindestens eines Teils einer ersten Funktionskomponente, der der Betriebsanforderung des ersten Geräts entspricht, so dass er in einem deaktivierten Zustand ist, und/oder Steuern mindestens eines Teils einer zweiten Funktionskomponente, der dem Betriebszustand des zweiten Geräts entspricht, so dass er in einem deaktivierten Zustand ist;
**dadurch gekennzeichnet, dass** das Bestimmen, dass der Betriebszustand des zweiten Geräts und die Betriebsanforderung des ersten Geräts die voreingestellte Interferenzbedingung erfüllen, Folgendes umfasst: Bestimmen, dass eine Summe aus einer Betriebsleistung, die dem Betriebszustand des zweiten Geräts entspricht, und einer Betriebsleistung, die der Betriebsanforderung des ersten Geräts entspricht, größer als eine voreingestellte Leistung ist.

2. Verfahren zum Steuern des Reinigungsgeräts gemäß Anspruch 1, wobei die erste Funktionskomponente mindestens zwei Komponenten umfasst, und die zweite Funktionskomponente mindestens zwei Komponenten umfasst.

3. Verfahren zum Steuern des Reinigungsgeräts gemäß Anspruch 2, wobei das erste Gerät das Wäschebehandlungsgerät ist, das zweite Gerät das Bodenreinigungsgerät ist, die erste Funktionskomponente mindestens eine Trocknungsanordnung und eine Dampferzeugungsanordnung umfasst und die zweite Funktionskomponente mindestens eine Heizanordnung für Waschwasser und eine Pumpenanordnung umfasst.

4. Verfahren zum Steuern des Reinigungsgeräts gemäß Anspruch 1, wobei das Bestimmen, dass der Betriebszustand des zweiten Geräts und die Betriebsanforderung des ersten Geräts die voreingestellte Interferenzbedingung erfüllen, Folgendes umfasst:
Bestimmen, dass eine Aufgabe, die dem Betriebszustand des zweiten Geräts entspricht und eine Aufgabe, die der Betriebsanforderung des ersten Geräts entspricht, eine voreingestellte Interferenzaufgabe sind.

5. Verfahren zum Steuern des Reinigungsgeräts gemäß Anspruch 1, wobei das Verfahren nach dem Steuern des mindestens einen Teils der ersten Funktionskomponente, der der Betriebsanforderung des ersten Geräts entspricht, so dass er in dem deaktivierten Zustand ist, Folgendes umfasst:
Steuern des ersten Geräts, so dass es eine verbleibende Aufgabe in der Betriebsanforderung ausführt,
wobei die verbleibende Aufgabe eine Aufgabe ist, mit Ausnahme einer Aufgabe zum Betreiben des mindestens einen Teils der ersten Funktionskomponente.

6. Verfahren zum Steuern des Reinigungsgeräts gemäß Anspruch 1, wobei das Verfahren, nach dem Steuern des mindestens einen Teils der zweiten Funktionskomponente, der dem Arbeitszustand des zweiten Geräts entspricht, so dass er in dem deaktivierten Zustand ist, Folgendes umfasst:
Steuern des ersten Geräts, so dass es eine Aufgabe ausführt, die der Betriebsanforderung entspricht.

7. Verfahren zum Steuern des Reinigungsgeräts gemäß Anspruch 1, wobei das erste Gerät das Bodenreinigungsgerät (2) ist, das zweite Gerät das Wäschebehandlungsgerät (1) ist, die Betriebsanforderung des Bodenreinigungsgeräts (2) ein Waschvorgang ist, der Arbeitszustand des Wäschebehandlungsgeräts (1) ein Trocknungsbetriebszustand ist und die erste Funktionskomponente eine Heizanordnung für Waschwasser umfasst,
wobei das Steuern des mindestens einen Teils der ersten Funktionskomponente, der der Betriebsanforderung des ersten Geräts entspricht, so dass er in dem deaktivierten Zustand ist, Folgendes umfasst:
(S304) Steuern der Heizanordnung für das Waschwasser, so dass sie im deaktivierten Zustand ist.

8. Verfahren zum Steuern des Reinigungsgeräts gemäß Anspruch 1, wobei das erste Gerät das Bodenreinigungsgerät (2) ist, das zweite Gerät das Wäschebehandlungsgerät (1) ist, die Betriebsanforderung des Bodenreinigungsgeräts (2) ein Waschvorgang ist, der Betriebszustand des Wäschebehandlungsgeräts (1) ein Trocknungsbetriebszustand ist und die zweite Funktionskomponente eine Dampferzeugungsanordnung umfasst,
wobei das Steuern des mindestens einen Teils der zweiten Funktionskomponente, der dem Betriebszustand des zweiten Geräts entspricht, so dass er im deaktivierten Zustand ist, Folgendes umfasst:
(S404) Steuern der Dampferzeugungsanordnung, so dass sie im deaktivierten Zustand ist.

9. Verfahren zum Steuern des Reinigungsgeräts gemäß Anspruch 1, wobei das zweite Gerät das Bodenreinigungsgerät (2) ist und das erste Gerät das Wäschebehandlungsgerät (1) ist; und
die Betriebsanforderung des Wäschebehandlungsgeräts (1) ein Trocknungsvorgang ist, der Betriebszustand des Bodenreinigungsgeräts (2) ein Waschbetriebszustand ist und die erste Funktionskomponente eine Dampferzeugungsanordnung umfasst,
wobei das Steuern des mindestens einen Teils der ersten Funktionskomponente, der der Betriebsanforderung des ersten Geräts entspricht, so dass er im deaktivierten Zustand ist, Folgendes umfasst:
(S404) Steuern der Dampferzeugungsanordnung, so dass sie im deaktivierten Zustand ist.

10. Verfahren zum Steuern des Reinigungsgeräts gemäß Anspruch 1, wobei das zweite Gerät das Bodenreinigungsgerät (2) ist und das erste Gerät das Wäschebehandlungsgerät (1) ist; und
die Betriebsanforderung des Wäschebehandlungsgeräts (1) ein Trocknungsvorgang ist, der Betriebszustand des Bodenreinigungsgeräts (2) ein Waschbetriebszustand ist und die zweite Funktionskomponente eine Heizanordnung für Waschwasser umfasst,
wobei das Steuern des mindestens einen Teils der zweiten Funktionskomponente, der dem Betriebszustand des zweiten Geräts entspricht, so dass er im deaktivierten Zustand ist, Folgendes umfasst:
(S304) Steuern der Heizanordnung für das Waschwasser, so dass sie im deaktivierten Zustand ist.

11. Steuervorrichtung für ein Reinigungsgerät, wobei das Reinigungsgerät ein erstes Gerät und ein zweites Gerät umfasst, eines des ersten Geräts und des zweiten Geräts ein Bodenreinigungsgerät (2) ist und das andere des ersten Geräts und des zweiten Geräts ein Wäschebehandlungsgerät (1) ist, wobei die Steuervorrichtung Folgendes umfasst:
ein erstes Erfassungsmodul (501), das so konfiguriert ist, dass es eine Betriebsanforderung eines ersten Geräts erfasst;
ein zweites Erfassungsmodul (502), das so konfiguriert ist, dass es einen Betriebszustand eines zweiten Geräts erfasst; und
ein Steuermodul (503), das so konfiguriert ist, dass es bestimmt, dass der Betriebszustand des zweiten Geräts und die Betriebsanforderung des ersten Geräts eine voreingestellte Interferenzbedingung erfüllen, mindestens ein Teil einer ersten Funktionskomponente, der der Betriebsanforderung des ersten Geräts entspricht, so steuert, dass er in einem deaktivierten Zustand ist, und/oder mindestens ein Teil einer zweiten Funktionskomponente, der dem Betriebszustand des zweiten Geräts entspricht, so steuert, dass er in einem deaktivierten Zustand ist;
**dadurch gekennzeichnet, dass** das Bestimmen, dass der Betriebszustand des zweiten Geräts und die Betriebsanforderung des ersten Geräts die voreingestellte Interferenzbedingung erfüllen, Folgendes umfasst: Bestimmen, dass eine Summe aus einer Betriebsleistung, die dem Betriebszustand des zweiten Geräts entspricht und einer Betriebsleistung, die der Betriebsanforderung des ersten Geräts entspricht, größer als eine voreingestellte Leistung ist.

12. Computerlesbares Speichermedium, aufweisend ein darauf gespeichertes Programm oder eine Anweisung, die bei Ausführung durch einen Computer ein Verfahren gemäß einem der Ansprüche 1 bis 10 ausführt.

13. Reinigungsgerät umfassend einen Prozessor (601) und einen Speicher (602), wobei der Prozessor (601) so konfiguriert ist, dass er ein im Speicher (602) gespeichertes Programm oder eine Anweisung aufruft, um ein Verfahren gemäß einem der Ansprüche 1 bis 10 auszuführen.

## Revendications

1. Procédé de commande d'un appareil de nettoyage, dans lequel l'appareil de nettoyage comprend un premier appareil et un second appareil, l'un du premier appareil et du second appareil étant un appareil de nettoyage des sols (2), et l'autre du premier appareil et du second appareil étant un appareil de traitement du linge (1), le procédé comprenant :
(5101) l'acquisition d'une demande de fonctionnement du premier appareil ;
(5102) l'acquisition d'un état de fonctionnement du second appareil ; et
(5103) la détermination du fait que l'état de fonctionnement du second appareil et la demande de fonctionnement du premier appareil satisfont à une condition d'interférence prédéfinie, la commande d'au moins une partie d'un premier composant fonctionnel correspondant à la demande de fonctionnement du premier appareil pour qu'elle soit dans un état désactivé, et/ou la commande d'au moins une partie d'un second composant fonctionnel correspondant à l'état de fonctionnement du second appareil pour qu'elle soit dans un état désactivé ;
**caractérisé en ce que** la détermination du fait que l'état de fonctionnement du second appareil et la demande de fonctionnement du premier appareil satisfont à la condition d'interférence prédéfinie comprend : la détermination du fait qu'une somme d'une puissance de fonctionnement correspondant à l'état de fonctionnement du second appareil et d'une puissance de fonctionnement correspondant à la demande de fonctionnement du premier appareil est supérieure à une puissance prédéfinie.

2. Procédé de commande de l'appareil de nettoyage selon la revendication 1, dans lequel le premier composant fonctionnel comprend au moins deux composants, et le second composant fonctionnel comprend au moins deux composants.

3. Procédé de commande de l'appareil de nettoyage selon la revendication 2, dans lequel le premier appareil est l'appareil de traitement du linge, le second appareil est l'appareil de nettoyage des sols, le premier composant fonctionnel comprend au moins un ensemble de séchage et un ensemble de génération de vapeur, et le second composant fonctionnel comprend au moins un ensemble de chauffage de l'eau de lavage et un ensemble pompe.

4. Procédé de commande de l'appareil de nettoyage selon la revendication 1, dans lequel la détermination du fait que l'état de fonctionnement du second appareil et la demande de fonctionnement du premier appareil satisfont à la condition d'interférence prédéfinie comprend :
la détermination du fait qu'une tâche correspondant à l'état de fonctionnement du second appareil et une tâche correspondant à la demande de fonctionnement du premier appareil sont une tâche d'interférence prédéfinie.

5. Procédé de commande de l'appareil de nettoyage selon la revendication 1, dans lequel, après la commande de ladite au moins une partie du premier composant fonctionnel correspondant à la demande de fonctionnement du premier appareil pour qu'elle soit dans l'état désactivé, le procédé comprend :
la commande du premier appareil pour exécuter une tâche restante dans la demande de fonctionnement, dans lequel la tâche restante est une tâche à l'exception d'une tâche destinée à faire fonctionner ladite au moins une partie du premier composant fonctionnel.

6. Procédé de commande de l'appareil de nettoyage selon la revendication 1, dans lequel, après la commande de ladite au moins une partie du second composant fonctionnel correspondant à l'état de fonctionnement du second appareil pour qu'elle soit dans l'état désactivé, le procédé comprend :
la commande du premier appareil pour exécuter une tâche correspondant à la demande de fonctionnement.

7. Procédé de commande de l'appareil de nettoyage selon la revendication 1, dans lequel le premier appareil est l'appareil de nettoyage des sols (2), le second appareil est l'appareil de traitement du linge (1), la demande de fonctionnement de l'appareil de nettoyage des sols (2) est une opération de lavage, l'état de fonctionnement de l'appareil de traitement du linge (1) est un état de fonctionnement de séchage, et le premier composant fonctionnel comprend un ensemble de chauffage de l'eau de lavage,
dans lequel la commande de ladite au moins une partie du premier composant fonctionnel correspondant à la demande de fonctionnement du premier appareil pour qu'elle soit dans l'état désactivé comprend :
(5304) la commande de l'ensemble de chauffage de l'eau de lavage pour qu'il soit dans l'état désactivé.

8. Procédé de commande de l'appareil de nettoyage selon la revendication 1, dans lequel le premier appareil est l'appareil de nettoyage des sols (2), le second appareil est l'appareil de traitement du linge (1), la demande de fonctionnement de l'appareil de nettoyage des sols (2) est une opération de lavage, l'état de fonctionnement de l'appareil de traitement du linge (1) est un état de fonctionnement de séchage, et le second composant fonctionnel comprend un ensemble de génération de vapeur,
dans lequel la commande de ladite au moins une partie du second composant fonctionnel correspondant à l'état de fonctionnement du second appareil pour qu'elle soit dans l'état désactivé comprend :
(5404) la commande de l'ensemble de génération de vapeur pour qu'il soit dans l'état désactivé.

9. Procédé de commande de l'appareil de nettoyage selon la revendication 1, dans lequel le second appareil est l'appareil de nettoyage des sols (2), et le premier appareil est l'appareil de traitement du linge (1) ; et
la demande de fonctionnement de l'appareil de traitement du linge (1) est une opération de séchage, l'état de fonctionnement de l'appareil de nettoyage des sols (2) est un état de fonctionnement de lavage, et le premier composant fonctionnel comprend un ensemble de génération de vapeur,
dans lequel la commande de ladite au moins une partie du premier composant fonctionnel correspondant à la demande de fonctionnement du premier appareil pour qu'elle soit dans l'état désactivé comprend :
(5404) la commande de l'ensemble de génération de vapeur pour qu'il soit dans l'état désactivé.

10. Procédé de commande de l'appareil de nettoyage selon la revendication 1, dans lequel le second appareil est l'appareil de nettoyage des sols (2), et le premier appareil est l'appareil de traitement du linge (1) ; et
la demande de fonctionnement de l'appareil de traitement du linge (1) est une opération de séchage, l'état de fonctionnement de l'appareil de nettoyage des sols (2) est un état de fonctionnement de lavage, et le second composant fonctionnel comprend un ensemble de chauffage de l'eau de lavage,
dans lequel la commande de ladite au moins une partie du second composant fonctionnel correspondant à l'état de fonctionnement du second appareil pour qu'elle soit dans l'état désactivé comprend :
(5304) la commande de l'ensemble de chauffage de l'eau de lavage pour qu'il soit dans l'état désactivé.

11. Dispositif de commande pour un appareil de nettoyage, dans lequel l'appareil de nettoyage comprend un premier appareil et un second appareil, l'un du premier appareil et du second appareil étant un appareil de nettoyage des sols (2), et l'autre du premier appareil et du second appareil étant un appareil de traitement du linge (1), le dispositif de commande comprenant :
un premier module d'acquisition (501), configuré pour acquérir une demande de fonctionnement d'un premier appareil ;
un second module d'acquisition (502), configuré pour acquérir un état de fonctionnement d'un second appareil ; et
un module de commande (503), configuré pour déterminer que l'état de fonctionnement du second appareil et la demande de fonctionnement du premier appareil satisfont à une condition d'interférence prédéfinie, commander au moins une partie d'un premier composant fonctionnel correspondant à la demande de fonctionnement du premier appareil pour qu'elle soit dans un état désactivé, et/ou commander au moins une partie d'un second composant fonctionnel correspondant à l'état de fonctionnement du second appareil pour qu'elle soit dans un état désactivé;
**caractérisé en ce que** la détermination du fait que l'état de fonctionnement du second appareil et la demande de fonctionnement du premier appareil satisfont à la condition d'interférence prédéfinie comprend : la détermination du fait qu'une somme d'une puissance de fonctionnement correspondant à l'état de fonctionnement du second appareil et d'une puissance de fonctionnement correspondant à la demande de fonctionnement du premier appareil est supérieure à une puissance prédéfinie.

12. Support de stockage lisible par ordinateur sur lequel est stocké un programme ou une instruction qui, lorsqu'il ou elle est exécuté(e) par un ordinateur, met en œuvre un procédé selon l'une quelconque des revendications 1 à 10.

13. Appareil de nettoyage comprenant un processeur (601) et une mémoire (602), dans lequel le processeur (601) est configuré pour appeler un programme ou une instruction stocké(e) dans la mémoire (602) afin de mettre en œuvre un procédé selon l'une quelconque des revendications 1 à 10.
